# EUROPEAN PATENT SPECIFICATION

(11) **EP 3 554 944 B1**
(45) Date of publication and mention of the grant of the patent: **25.11.2020**
(21) Application number: 17817302.7
(22) Date of filing: 12.12.2017
(51) Int. Cl.: B64C 39/02

(54) **INSECT ELIMINATION SYSTEM AND USE THEREOF**
INSEKTENELIMINIERUNGSSYSTEM UND DESSEN VERWENDUNG
SYSTÈME D'ÉLIMINATION D'INSECTES ET SON UTILISATION

(30) Priority: 13.12.2016 NL 2017984
(43) Date of publication of application: 23.10.2019
(73) Proprietor: MU-G KNOWLEDGE MANAGEMENT B.V., 2629 HS DELFT (NL)
(72) Inventor: VAN HECKE, Kevin George, 2600 AA Delft (NL); TIJMONS, Bram, 2600 AA Delft (NL); TIJMONS, Sjoerd, 2600 AA Delft (NL)
(74) Representative: EP&C
(86) International application number: PCT/NL2017/050834
(87) International publication number: WO 2018/111101

(56) References cited:
- DE-U1-202014 009 166
- JP-A- 2015 228 803
- US-A1- 2016 183 514
- US-B1- 9 693 547
- Peter Odrich: "Schädlingsbekämpfung: Diese Drohne jagt Asiatische Hornissen", , 23 June 2016 (2016-06-23), XP055395420, Retrieved from the Internet: URL:http://www.ingenieur.de/Fachbereiche/R obotik/Schaedlingsbekaempfung-Diese-Drohne -jagt-Asiatische-Hornissen [retrieved on 2017-08-02]
- Anonymous: "Building a better mosquito trap: How a Microsoft research project could help track Zika's spread - News Center", , 21 June 2016 (2016-06-21), XP055395779, Retrieved from the Internet: URL:https://news.microsoft.com/features/bu ilding-a-better-mosquito-trap-how-a-micros oft-research-project-could-help-track-zika s-spread/#IRuxfDktMuF0Dgaq.97 [retrieved on 2017-08-03]

## Description

The present invention relates to an insect elimination system for eliminating a flying insect in an airspace and to a use of such insect elimination system.

Insect elimination may be carried out for a variety of reasons. For example, insects, in particular insect bites or stings may cause a transfer of diseases such as Malaria and Zika virus. As another example, an insect in a room, such as a bedroom may result in sleep deprivation or negatively affect a quality of sleep. Also, insects may contribute to damage to plants, for example by the insects themselves eating leafs of the plant, larvae of the insects eating leafs of the plant or by a transfer of diseases that harm the plant.

In order to carry out insect elimination, many solutions have been devised. For example, insecticides have been developed in order to repel the insects. As another example, for indoor use insect screens and mosquito nets may keep insects out of a certain area. Furthermore, natural solutions may be deployed, for example certain plant varieties may be planted which keep insects away by dispersing certain substances. JP 2015228803 discloses a UAV for sucking in insects into a chamber carried by the UAV.

US9693547 discloses a system for tracking and counteracting insects, including an imager, an unmanned aerial vehicle with an embedded counteracting device and a processor.

The article "Schadlingsbekämpfung: Diese Drohne jagt Asiatische Hornissen", retrieved from the Internet: URL:http:// www.ingenieur.de/ Fachbereiche/ Robotik/

Schaedlingsbekaempfung-Diese-Drohne-jagt-Asiatische-Hornissen, XP055395420, 2016-06-23, Peter Odrich, discloses an unmanned aerial vehicle provided with a camera and an aerosol insecticide spray device.

US2016/183514 A1 discloses a device for frightening birds from a location. The device uses the shape or outline of a predator attached to a powered flying device to maximize the frightening effect.

DE202014009166U1 discloses an autonomous unmanned drone for chasing away birds and bats, provided with a light source and a loudspeaker.

The article "Building a better mosquito trap: How a Microsoft research project could help track Zika's spread - News Center ", 21 June 2016 (2016-06-21), P055395779, retrieved from the Internet: URL:https://news.microsoft.com/ features/building-a-better- mosquito-trap-how-a-microsoft-research-project-could-help-track-zikas- spread/ #IRuxfDktMuF0Dgaq.97 discloses the use of drones to transport and place mosquito traps in remote areas.

The invention aims to provide an alternative means of insect repelling.

According to an aspect of the invention, there is provided an insect elimination system for eliminating a flying insect in an airspace, comprising:
- a camera configured to provide image data representative of at least part of the airspace;
- an unmanned aerial vehicle, UAV, comprising a propeller to propel the UAV through the airspace; and
- a controller, the controller being connected via an image data connection to the camera to receive the image data, and being connected via a control data connection to the UAV to provide control data to the UAV, the controller being configured to:
- monitor the image data received from the camera, for an image of an insect; and
- in case an image of an insect has been found in the image data:
- derive from the image data a position of the insect in the airspace; and
- guide the UAV via the control data connection, using the derived position of the insect in the airspace, to hit the insect by the propeller.

Thus according to the invention, an unmanned aerial vehicle, UAV, also called a drone, is applied. The UAV can be guided through the airspace of interest and comprises at least one propeller for propelling the UAV through the airspace. The propeller may for example be a single propeller which rotates about a vertical axis in a horizontal plane. As another example, plural propellers may be provided, such as 2, 3 or 4 propellers.

The system further comprises a camera, such as a video camera, which images at least a part of the airspace and provides image data, such as video data, representative of at least a part of the airspace. A single camera device may be employed. Alternatively, plural camera devices may be employed, for example each surveying a different part of the airspace, or a combination of a stationary camera device and a camera device that is attached to the UAV. The camera may for example be a CMOS camera or employ any other camera technology. The image data may comprise video data, a time sequence of pictures, or any other image data. The image data, as output by the camera, is provided via an image data connection to a controller. The controller (which may also be identified as control device: the terms controller and control device being interchangeable in the present document) may for example be formed by any control logic or data processing device, such as a microprocessor circuit, a microcontroller circuit, etc. The image data connection may be formed by any analogue or digital data connection and may be e.g. a wired connection or a wireless connection (depending on location the camera and the controller. For example, a stationary camera and a stationary controller may communicate via a wired connection, while in case the camera would be stationary and the controller would be provided at the UAV, a wireless connection may be employed). The controller monitors the image data for the occurrence of an image of an insect. Thereto, the controller may employ image processing to recognize an image of an insect. Alternatively, other criteria may be applied, such as a speed of movement of an item through the airspace, as will be explained in more detail below.

Having detected an image of an insect, the controller proceeds by guiding the UAV. Thereto, the controller is connected to the UAV by means of any suitable control data connection, such as a wireless data connection. The controller guides the UAV to hit the insect by the propeller. As the propeller of the UAV moves at a high speed, the insect is hit by one or more of the propeller blades with a great impact. Thereby, the insect is eliminated. Throughout this document, the terms insect elimination and insect repelling may be interchanged Furthermore, due to the centrifugal force caused by the rotation of the propeller, a releasing of remains of the insect from the propeller is facilitated in order to keep the propeller clean.

The UAV may navigate through the airspace to hit the insect from any angle. For example, the UAV may navigate to the insect sideways. In an embodiment, use is made of an air stream in the air space generated by the propeller. The airstream sucks air towards the propeller, generally at a top side of the UAV. Navigating the UAV to a position where the insect is subjected to the suction of the propeller will facilitate elimination, as the suction effect will provide that a less accurate navigation of the UAV may be required, as an air volume in the airspace where a notable amount of suction occurs, may be larger than the volume in the airspace through which the propeller itself rotates. Thus, the controller may navigate the UAV to a position in the airspace below the insect, whereby the insect is subjected to the suction of air by the propeller, thus providing that the insect is sucked towards to propeller in order to be hit.

In an embodiment, the controller is further configured to
- derive from the image data, an elimination start position of the UAV in the airspace, the elimination start position being below the derived position of the insect
- guide the UAV to navigate to the elimination start position in the airspace, and
- propel the UAV upwardly from the elimination start position to the derived position of the insect.

Thus, navigation may be facilitated in that the controller first determines a position below the insect, for example a position at a predetermined distance below the insect in order to get the insect to be subjected to the suction by the propeller or determine a position in a horizontal plane in which the UAV is present at that moment in time, so as to enable moving to the position below the insect by means of a horizontal movement of the UAV. Having determined that position, the controller guides the UAV to the position below the insect (the elimination start position) and then guides the UAV upwardly towards the insect. In order to take account of the movements of the insect in the airspace, updated image data may be employed to iteratively correct the position of the UAV to remain below the insect. By the movement of the UAV upward, an upward thrust is generated by the propeller, which increases a suction of air towards the propeller and increases a rotational speed of the propeller, thereby enabling to more effectively eliminate the insect.

In an embodiment, the camera is attached (e.g. connected, mounted, integrally mounted etc.) to the UAV. Thereby, an easy navigation may be provided, as the closer the UAV gets to the insect, the closer the insect gets to the camera, the more accurately the position of the insect may be derived from the image data, for example making use of size of the insect in the image and position of the insect in the image. Hence, navigation by the controller may be facilitated, allowing a relatively low processing power controller to be employed. In case the camera is attached to the UAV, the controller may likewise be attached to or provided in the UAV thus providing an integral solution.

In an embodiment, a field of view of the camera is vertically oriented upwards,
wherein the controller is further configured to derive an elimination start position from a horizontal path calculated on the basis of the location of the image of the insect in the image data and a centre of the image data, and wherein the controller is configured to guide the UAV to navigate to the elimination start position by controlling the UAV to move according to the horizontal path. Thereby, the controller navigates the UAV to a position below the insect by guiding the UAV to a position where the insect gets to a centre of the image. Tracking of the movements of the insect may also be facilitated, by iteratively determining a position of the insect in the image relative to a centre of the image, and guide the UAV so that the insect moves towards the centre of the image.

Alternatively to the camera at the UAV, in another embodiment, the camera is positioned at a stationary location. The camera may survey the airspace in its entirety (or a part thereof), whereby both an insect as well as the UAV may be imaged by the camera. The controller may likewise be provided at the stationary location or may be provided in or attached to the UAV.

In an embodiment, the controller is further configured to:
- derive a position of the UAV in the airspace from the image data. Hence, the camera may not only be employed to detect a position of the insect, but may also serve to detect a position of the UAV in the airspace, thus enabling a low cost solution to determine a position of the UAV as well.

In an embodiment, the controller is further configured to
- determine an image size and an image position of the UAV in the image data; and
- derive the position of the UAV in the airspace from the image size and the image position. For example, the distance of the UAV to the camera may be derived from the size of the UAV in the image data. Thereto, the controller may determine the size of the image of the UAV from the image data, and compare the size of the image of the UAV to a reference (such as a known size of the UAV, a look up table listing size versus distance, a formula expressing distances a function of size etc.), thus to determine the distance of the UAV from the camera. The position of the UAV in the image may be employed by the controller to estimate the angle at which the UAV is viewed in respect of an optical axis of the camera. For example, in case the optical axis of the camera is oriented at an angle 45 degrees upwardly, the position of the image of the UAV in the camera image in respect of the centre of the image as captured by the camera will indicate an angle in respect of the optical axis of the camera.

In an embodiment, the UAV comprises recognition markers, such as LED's, and wherein the controller is configured to determine the image size of the UAV from the distance between the recognition markers, thereby allowing to reliably detect the UAV in the image as well as to provide a fast estimation of the distance of the UAV from the camera from the distance between the recognition markers.

In an embodiment, the controller is further configured to
- determine an image size and an image position of the insect in the image data, and
- derive the position of the insect in the airspace from the image size and image position in the image data. Hence, likewise to the position measurement of the UAV, the distance of the insect from the camera may be derived from size, and the angle may be derived from the position of the image of the insect in respect of a centre of the camera image.

As an alternative to the position determination from image size and image position, the camera may comprise a stereoscopic camera, and the image data may comprise stereoscopic image data, whereby the controller may be configured to derive the position of the UAV and the insect in the airspace from the stereoscopic image data.

In an embodiment, the stationary location comprises a charging station configured to charge the UAV. Thus, the UAV can be placed at a standby position at the charging station, where it is charged and from where the stationary camera observes the airspace. Charging may for example be wireless. The camera may also be employed to enable the controller to guide the UAV to the charging station based on the image data.

In an embodiment, the controller is configured to recognize the insect in the image data on the basis of at least one criterion from a size criterion, a shape criterion, a speed criterion and a colour criterion. By distinguishing the insect in the image data from one or more of size, shape, speed, and colour, a relatively easy and reliable insect detection may be provided. Also, a distinction can be made between different types of insects based on selection criteria such as colour, size, etc. Using at least one of the size criterion, colour criterion, shape criterion and speed criterion, different types of insects, such as a mosquito, a fly, a bee, a wasp, may be distinguished by the controller. Hence, the controller may operate the UAV to selectively act against certain types of insects, hence enabling to make the insect elimination system selective.

In an embodiment, a sensitivity wavelength band of the camera extends into an infrared wavelength band, thus enabling to more reliably distinguish the insect from any other object in the airspace based on the insects emission or reflection of infrared radiation. Furthermore, the infrared radiation is generally invisible to humans, which may enable to provide a less obtrusive insect elimination system. The system may comprise an infrared light source, such as an infrared diode, positioned to irradiate into at least part of a field of view of the camera. When an insect is irradiated by the infrared radiation, an image of the insect may be captured by the camera at a high contrast. Hence, detection of the insect is made possible, at low ambient light conditions, such as at night.

According to a further aspect of the invention, there is provided a use of the insect elimination system according to the invention for insect repelling.

The insect elimination system may for example be employed to eliminate insects in agriculture, to eliminate insects in horticulture, such as in a greenhouse, to eliminate insects in a room, such as a bedroom in order to improve sleep quality, to reduce spreading of a disease via insects or for insecticide free insect repelling.

Further advantages, effects and features of the invention will follow from the below description and the appended drawing showing a non-limiting embodiment, wherein:
Figure 1 depicts a highly schematic view of an insect elimination system according to an embodiment of the invention;
Figure 2 depicts a highly schematic view of an image of a camera of the insect elimination system according to Figure 1;
Figure 3 depicts a highly schematic view of an insect elimination system according to another embodiment of the invention; and
Figure 4 depicts a highly schematic view of an image of a camera of the insect elimination system according to Figure 3.

Throughout the figures, the same or similar items are denoted by the same reference numerals.

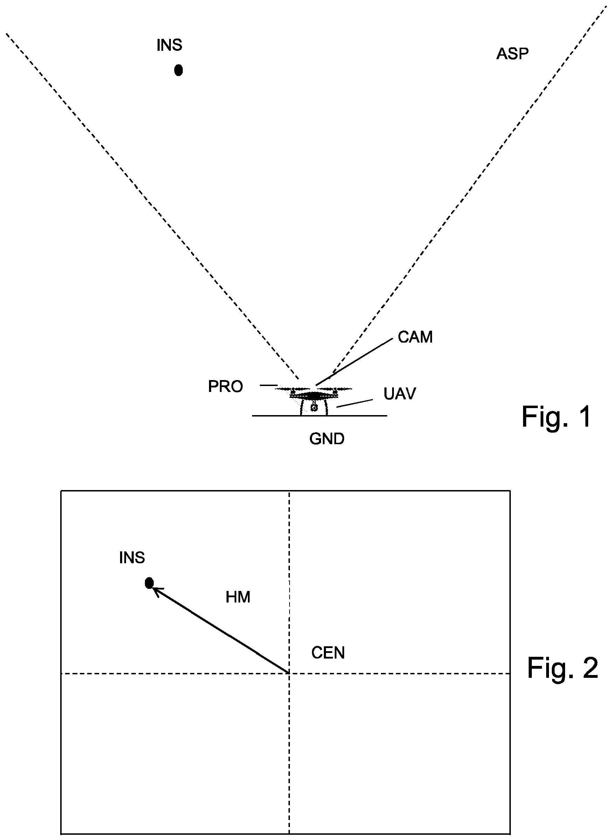

Figure 1 depicts an insect elimination system comprising an unmanned aerial vehicle UAV having propellers PRO which propel the UAV through an airspace ASP. A video camera CAM is provided at the UAV and is directed upwardly. In an alternative embodiment, the camera may be directed in horizontal direction, for example in case of a UAV comprising a propeller that is rotatable about a horizontal axis of rotation. In a standby or surveillance position, the UAV is located at the ground while the camera observes the airspace. ASP. Image data from the camera is provided to a controller CON, which is, in the present embodiment, also located in or at the UAV. The controller monitors the image data for the presence of an image of an insect. When an insect INS has been detected, the controller determines a position of the insect in the airspace from the position and/or size of the insect in the image, and activates the UAV to ascend towards the insect. Thereby, approaching the insect from below, the insect is subjected to a suction by the operating propellers, causing the insect to be sucked towards the propellers and eliminated by the fast moving propeller. Having eliminated the insect, the image of the flying insect as obtained by the camera will have disappeared, causing the controller to detect that the observed part of the airspace is clear, and causing the controller to guide the UAV back to the standby / surveillance position.

An image of the upwardly oriented field of view of the camera is schematically depicted in Figure 2. The camera being directed upwardly, a position of the image of the insect in the camera image is representative of a position of the insect in a horizontal plane, i.e. in the x,y plane. Thus, the controller may derive a required horizontal movement HM of the UAV, in order to get below the insect, from the position of the image of the insect in the camera image. Such navigation may be performed iteratively, as the image moves with the horizontal movement (component) of the UAV, until the image of the insect is at or near a centre CEN of the camera image. Having navigated in the horizontal direction to a position below the insect (also referred to as elimination start position), the controller guides the UAV upwards by increasing propeller power, hence on the one hand approaching the insect and on the other hand increasing suction to suck the insect towards the propeller(s). The vertical distance towards the insect may be estimated by the controller from a size of the image of the insect. The elimination start position may be at any suitable distance below the insect. It will be noted that, when using a camera attached to the UAV and directed in e.g. a horizontal direction or any other direction, the same principle may be used mutatis mutandis. Generally, when the camera attached to the UAV is directed in an camera direction (i.e. a direction of viewing of the camera) the position of the image of the insect in the camera image relative to a centre of the camera image may allow the controller to determine a translation in the plane perpendicular to the camera direction. A size of the image of the insect in the camera image may allow the controller to estimate a distance from the insect. The controller may guide the UAV to navigate to move in the plane perpendicular to the imaging direction to get the image of the insect towards the centre of the camera image, and then to move in the imaging direction towards the insect to hit the insect.

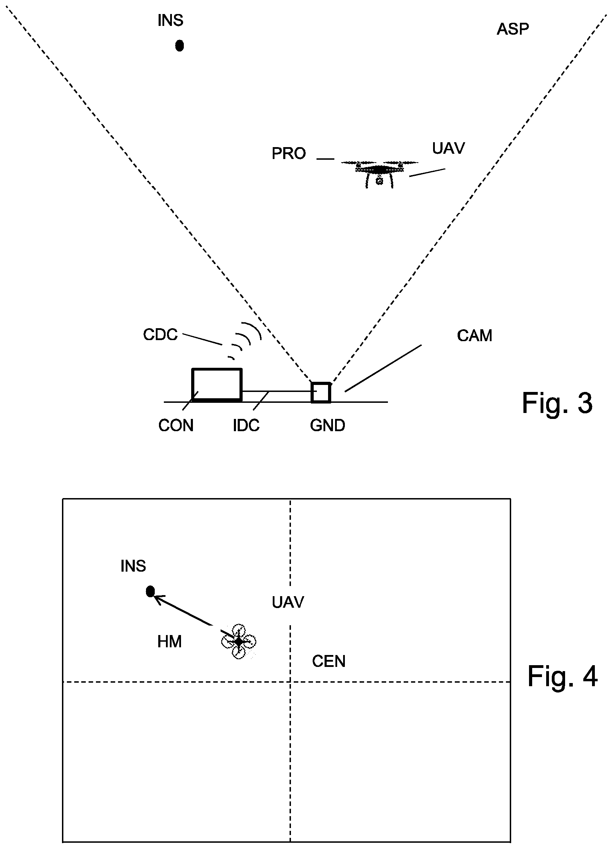

Figure 3 depicts a configuration that forms an alternative to the configuration in accordance with Figure 1. Deviating from the description to Figure 1, the camera and controller are located at a stationary location at the ground GND. The image data connection IDC between camera and controller may be wired, while the control data connection CDC between the controller and the UAV may be wireless.

Figure 4 depicts a camera image of the camera in Figure 3. Contrary to the camera image of the figure 1 and 2 embodiment, the camera may not only image an insect, but also the UAV. Hence, a position of the insect in the airspace as well as a position of the UAV in the airspace may be derived from the camera image. Thereby, the position in the horizontal plane may be derived from the position of the image of insect respectively UAV in the image plane, while the distance may be derived from a size of the image of insect respectively UAV in the image plane. As a size of the UAV is known the controller may derive a distance of the UAV, i.e. a flying height of the UAV from the size of the UAV image as captured by the camera. Use may be made of markers on the UAV, such as visible or IR LEDs at a known distance, enabling the controller to derive the distance to the UAV from the distance between the markers as seen in the camera image. A horizontal movement HM component for movement of the UAV in the airspace may be derived by the controller from the relative positions in the image plane of the camera image. A vertical component may be derived from the size estimations as described above. Both may be performed iteratively, thereby determining the positions of the UAV and insect as described above. Likewise as described with reference to Figure 2, the controller may first guide the UAV in a horizontal plane, so as to arrive at a position below the insect, being the elimination start position and then move upwardly on the basis of the determined distance.

In either embodiment, the insect may be recognized using any suitable combination of size, speed, shape, and colour. Thus, an insect may be recognized by the controller as a small, moving object in the airspace exhibiting a correlation to a reference image of an insect and a colour in a colour band.

The insect elimination system may for example be employed to eliminate insects in agriculture, to eliminate insects in horticulture, such as in a greenhouse, to eliminate insects in a room, such as a bedroom, to reduce spreading of a disease via insects or for insecticide free insect repelling.

## Claims

1. An insect elimination system for eliminating a flying insect in an airspace, comprising:
- a camera (CAM) configured to provide image data representative of at least part of the airspace;
- an unmanned aerial vehicle, UAV, comprising a propeller (PRO) to propel the UAV through the airspace; and
- a controller (CON), the controller being connected via an image data connection (IDC) to the camera to receive the image data, and being connected via a control data connection (CDC) to the UAV to provide control data to the UAV, the controller being configured to:
- monitor the image data received from the camera, for an image of an insect; Z wherein the controller is further configured to:
in case an image of an insect has been found in the image data:
- derive from the image data a position of the insect in the airspace; and **characterized in that** the controller is further configured to J
- guide the UAV via the control data connection, using the derived position of the insect in the airspace, to hit the insect by the propeller.

2. The insect elimination system according to claim 1, wherein the controller further is configured to
- derive from the image data, an elimination start position of the UAV in the airspace, the elimination start position being below the derived position of the insect;
- guide the UAV to navigate to the elimination start position in the airspace, and
- propel the UAV upwardly from the elimination start position to the derived position of the insect.

3. The insect elimination system according to claim 1 or 2, wherein the camera is attached to the UAV.

4. The insect elimination system according to claim 3, wherein a field of view of the camera is vertically oriented upwards, wherein the controller is further configured to derive an elimination start position from a horizontal path calculated on the basis of the location of the image of the insect in the image data and a centre of the image data, and wherein the controller is configured to guide the UAV to navigate to the elimination start position by controlling the UAV to move according to the horizontal path.

5. The insect elimination system according to claim 1 or 2, wherein the camera is positioned at a stationary location.

6. The insect elimination system according to claim 5, wherein the controller is further configured to:
- derive a position of the UAV in the airspace from the image data.

7. The insect elimination system according to claim 6, wherein the controller is further configured to
- determine an image size and an image position of the UAV in the image data; and
- derive the position of the UAV in the airspace from the image size and the image position.

8. The insect elimination system according to claim 7, wherein the UAV comprises recognition markers, such as LED's, and wherein the controller is configured to determine the image size of the UAV from the distance between the recognition markers.

9. The insect elimination system according to claim 7 or 8, wherein the controller is further configured to
- determine an image size and an image position of the insect in the image data, and
- derive the position of the insect in the airspace from the image size and image position in the image data.

10. The insect elimination system according to claim 5 or 6, wherein the camera comprises a stereoscopic camera, and the image data comprise stereoscopic image data, and wherein the controller is configured to derive the position of the UAV and the insect in the airspace from the stereoscopic image data.

11. The insect elimination system according to any of claims 5 - 10, wherein the stationary location comprises a charging station configured to charge the UAV.

12. The insect elimination system according to any one of the preceding claims, wherein the controller is configured to recognize the insect in the image data on the basis of at least one criterion from a size criterion, a shape criterion, a speed criterion and a colour criterion.

13. The insect elimination system according to any of the preceding claims, wherein a sensitivity wavelength band of the camera extends into an infrared wavelength band.

14. Use of the insect elimination system according to any of claims 1 - 13 for insect repelling, preferably insecticide free insect repelling.

15. Use according to claim 14 to eliminate insects in agriculture or to eliminate insects in horticulture, such as in a greenhouse.

16. Use according to claim 14 to eliminate insects in a room, such as a bedroom or to improve sleep quality.

17. Use according to claim 14 to reduce spreading of a disease via insects.

## Patentansprüche

1. Insekteneliminierungssystem zum Eliminieren eines fliegenden Insekts in einem Luftraum, umfassend:
- eine Kamera (CAM), welche ausgestaltet ist, um Bilddaten bereitzustellen, die für zumindest einen Teil des Luftraums repräsentativ sind;
- ein unbemanntes Luftfahrzeug, UAV, welches einen Propeller (PRO) umfasst, um das UAV durch den Luftraum anzutreiben; und
- eine Steuerung (CON), wobei die Steuerung über eine Bilddatenverbindung (IDC) mit der Kamera verbunden ist, um Bilddaten zu erfassen, und über eine Steuerdatenverbindung (CDC) mit dem UAV verbunden ist, um dem UAV Steuerdaten bereitzustellen, wobei die Steuerung ausgestaltet ist, um:
- die Bilddaten, welche von der Kamera erfasst werden, bezüglich eines Bildes eines Insekts zu überwachen;
wobei die Steuerung darüber hinaus ausgestaltet ist, um:
in dem Fall, dass ein Bild eines Insekts in den Bilddaten gefunden worden ist:
- von den Bilddaten eine Position des Insekts in dem Luftraum abzuleiten; und **dadurch gekennzeichnet, dass** die Steuerung darüber hinaus ausgestaltet ist, um
- das UAV mittels der Steuerdatenverbindung zu führen, wobei die abgeleitete Position des Insekts in dem Luftraum verwendet wird, um das Insekt mit dem Propeller zu treffen.

2. Insekteneliminierungssystem nach Anspruch 1, wobei die Steuerung darüber hinaus ausgestaltet ist, um
- von den Bilddaten eine Eliminierungsstartposition des UAV in dem Luftraum abzuleiten, wobei die Eliminierungsstartposition unterhalb der abgeleiteten Position des Insekts liegt;
- das UAV zu führen, um es zu der Eliminierungsstartposition in dem Luftraum zu navigieren, und
- das UAV von der Eliminierungsstartposition nach oben zu der abgeleiteten Position des Insekts anzutreiben.

3. Insekteneliminierungssystem nach Anspruch 1 oder 2, wobei die Kamera an dem UAV angebracht ist.

4. Insekteneliminierungssystem nach Anspruch 3, wobei ein Gesichtsfeld der Kamera vertikal nach oben ausgerichtet ist, wobei die Steuerung darüber hinaus ausgestaltet ist, um eine Eliminierungsstartposition von einem horizontalen Pfad, welcher auf der Basis der Lage des Bildes des Insekts in den Bilddaten und einem Zentrum der Bilddaten berechnet wird, abzuleiten, und wobei die Steuerung ausgestaltet ist, um das UAV zu führen, um es zu der Eliminierungsstartposition zu navigieren, indem das UAV gesteuert wird, um sich entsprechend dem horizontalen Pfad zu bewegen.

5. Insekteneliminierungssystem nach Anspruch 1 oder 2, wobei die Kamera an einem stationären Standort positioniert ist.

6. Insekteneliminierungssystem nach Anspruch 5, wobei die Steuerung darüber hinaus ausgestaltet ist, um:
- eine Position des UAV in dem Luftraum von den Bilddaten abzuleiten.

7. Insekteneliminierungssystem nach Anspruch 6, wobei die Steuerung darüber hinaus ausgestaltet ist, um
- eine Bildgröße und eine Bildposition des UAV in den Bilddaten zu bestimmen; und
- die Position des UAV in dem Luftraum von der Bildgröße und der Bildposition abzuleiten.

8. Insekteneliminierungssystem nach Anspruch 7, wobei das UAV Erkennungsmarkierungen, wie z.B. LEDs, umfasst, und wobei die Steuerung ausgestaltet ist, um die Bildgröße des UAV von der Entfernung zwischen den Erkennungsmarkierungen zu bestimmen.

9. Insekteneliminierungssystem nach Anspruch 7 oder 8, wobei die Steuerung darüber hinaus ausgestaltet ist, um
- eine Bildgröße und eine Bildposition des Insekts in den Bilddaten zu bestimmen, und
- die Position des Insekts in dem Luftraum von der Bildgröße und der Bildposition in den Bilddaten abzuleiten.

10. Insekteneliminierungssystem nach Anspruch 5 oder 6, wobei die Kamera eine stereoskopische Kamera umfasst, und wobei die Bilddaten stereoskopische Bilddaten umfassen, und wobei die Steuerung ausgestaltet ist, um die Position des UAV und des Insekts in dem Luftraum von den stereoskopischen Bilddaten abzuleiten.

11. Insekteneliminierungssystem nach einem der Ansprüche 5 - 10, wobei der stationäre Standort eine Ladestation umfasst, welche ausgestaltet ist, um das UAV aufzuladen.

12. Insekteneliminierungssystem nach einem der vorhergehenden Ansprüche, wobei die Steuerung ausgestaltet ist, um das Insekt in den Bilddaten auf der Basis zumindest eines Kriteriums von einem Größenkriterium, einem Formkriterium, einem Geschwindigkeitskriterium und einem Farbkriterium zu erkennen.

13. Insekteneliminierungssystem nach einem der vorhergehenden Ansprüche, wobei sich ein Empfindlichkeitswellenlängenband der Kamera in ein Infrarotwellenlängenband erstreckt.

14. Verwendung des Insekteneliminierungssystems nach einem der Ansprüche 1 - 13 zur Insektenabwehr, vorzugsweise zur insektizidfreien Insektenabwehr.

15. Verwendung nach Anspruch 14, um Insekten in der Landwirtschaft zu eliminieren oder Insekten beim Gartenbau, wie z. B. in einem Gewächshaus, zu eliminieren.

16. Verwendung nach Anspruch 14, um Insekten in einem Raum, wie z.B. einem Schlafzimmer, zu eliminieren oder um eine Schlafqualität zu verbessern.

17. Verwendung nach Anspruch 14, um eine Ausbreitung einer Krankheit mittels Insekten zu verringern.

## Revendications

1. Système d'élimination d'insectes destiné à éliminer des insectes qui volent dans un espace aérien, comprenant :
- une caméra (CAM) configuré pour fournir des données d'image représentatives d'au moins une partie de l'espace aérien ;
- un véhicule aérien autonome, UAV, comprenant une hélice (PRO) destinée à propulser le véhicule aérien autonome dans l'espace aérien ; et
- un contrôleur (CON), le contrôleur étant relié via une connexion de données d'image (IDC) à la caméra afin de recevoir les données d'image, et étant relié via une connexion de données de contrôle (CDC) au véhicule aérien autonome afin de fournir des données de contrôle au véhicule aérien autonome, le contrôleur étant configuré pour :
- surveiller les données d'image reçues de la part de la caméra, pour une image d'insectes ;
dans lequel le contrôleur est en outre configuré pour :
lorsqu'une image d'insectes a été trouvée dans les données d'image :
- dériver, des données d'image, une position des insectes dans l'espace aérien ; et
**caractérisé en ce que** le contrôleur est en outre configuré pour
- guider le véhicule aérien autonome via la connexion de données de contrôle, à l'aide de la position dérivée des insectes dans l'espace aérien, afin de heurter les insectes par l'hélice.

2. Système d'élimination d'insectes selon la revendication 1, dans lequel le contrôleur est en outre configuré pour
- dériver, à partir des données d'image, une position de début d'élimination du véhicule aérien autonome dans l'espace aérien, la position de début d'élimination étant sous la position dérivée des insectes ;
- guider le véhicule aérien autonome afin de naviguer jusqu'à la position de début d'élimination dans l'espace aérien, et
- propulser le véhicule aérien autonome vers le haut, entre la position de début d'élimination et la position dérivée des insectes.

3. Système d'élimination d'insectes selon la revendication 1 ou 2, dans lequel la caméra est fixé sur le véhicule aérien autonome.

4. Système d'élimination d'insectes selon la revendication 3, dans lequel un champ de vision de la caméra est orienté verticalement vers le haut, dans lequel le contrôleur est en outre configuré pour dériver une position de début d'élimination à partir d'un trajet horizontal calculé sur la base de l'emplacement de l'image des insectes dans les données d'image, et d'un centre des données d'image, et dans lequel le contrôleur est configuré pour guider le véhicule aérien autonome afin de naviguer jusqu'à la position de début d'élimination en contrôlant le véhicule aérien autonome afin qu'il se déplace selon le trajet horizontal.

5. Système d'élimination d'insectes selon la revendication 1 ou 2, dans lequel la caméra est positionné à un emplacement stationnaire.

6. Système d'élimination d'insectes selon la revendication 5, dans lequel le contrôleur est en outre configuré pour :
- dériver une position du véhicule aérien autonome dans l'espace aérien à partir des données d'image.

7. Système d'élimination d'insectes selon la revendication 6, dans lequel le contrôleur est en outre configuré pour
- déterminer une taille d'image et une position d'image du véhicule aérien autonome dans les données d'image ; et
- dériver la position du véhicule aérien autonome dans l'espace aérien à partir de la taille d'image et de la position d'image.

8. Système d'élimination d'insectes selon la revendication 7, dans lequel le véhicule aérien autonome comprend des marqueurs de reconnaissance, tels que des LED, et dans lequel le contrôleur est configuré pour déterminer la taille d'image du véhicule aérien autonome à partir de la distance entre les marqueurs de reconnaissance.

9. Système d'élimination d'insectes selon la revendication 7 ou 8, dans lequel le contrôleur est en outre configuré pour
- déterminer une taille d'image et une position d'image des insectes dans les données d'image,
et
- dériver la position des insectes dans l'espace aérien à partir de la taille d'image et de la position d'image dans les données d'image.

10. Système d'élimination d'insectes selon la revendication 5 ou 6, dans lequel la caméra comprend une caméra stéréoscopique, et les données d'image comprennent des données d'image stéréoscopiques, et dans lequel le contrôleur est configuré pour dériver la position du véhicule aérien autonome et des insectes dans l'espace aérien à partir des données d'image stéréoscopiques.

11. Système d'élimination d'insectes selon l'une quelconque des revendications 5 à 10, dans lequel l'emplacement stationnaire comprend un poste de chargement configuré pour charger le véhicule aérien autonome.

12. Système d'élimination d'insectes selon l'une quelconque des revendications précédentes, dans lequel le contrôleur est configuré pour reconnaître les insectes dans les données d'image sur la base d'au moins un critère parmi un critère de taille, un critère de forme, un critère de vitesse et un critère de couleur.

13. Système d'élimination d'insectes selon l'une quelconque des revendications précédentes, dans lequel une bande de longueurs d'onde de sensibilité de la caméra s'étend dans une bande de longueurs d'onde infrarouges.

14. Utilisation du système d'élimination d'insectes selon l'une quelconque des revendications 1 à 13 destiné à repousser des insectes, de préférence à repousser des insectes sans pesticide.

15. Utilisation selon la revendication 14 destinée à éliminer des insectes dans l'agriculture ou à éliminer des insectes dans l'horticulture, comme dans une serre.

16. Utilisation selon la revendication 14 destinée à éliminer des insectes dans une pièce, comme une chambre, ou à améliorer la qualité du sommeil.

17. Utilisation selon la revendication 14 destinée à réduire la propagation d'une maladie via des insectes.
